# EUROPEAN PATENT APPLICATION

(11) **EP 2 887 276 A1**
(43) Date of publication of application: **24.06.2015**
(21) Application number: 13382536.4
(22) Date of filing: 20.12.2013
(51) Int. Cl.: G06N 99/00

(54) **Method for predicting reactiveness of users of mobile devices for mobile messaging**

(71) Applicant: Telefonica Digital España, S.L.U., 28013 Madrid (ES)
(72) Inventor: Pielot, Martin, 08019 Barcelona (ES); Oliver Ramirez, Nuria, 08019 Barcelona (ES); Kwak, Haewoon, 08019 Barcelona (ES); De Oliveira, Rodrigo, 08019 Barcelona (ES)
(74) Representative: Carpintero Lopez, Francisco

(57) **Abstract**

A method for predicting reactiveness of MMI users comprises:
- reacting to a message with a mobile user device which is a receiver of the message,
- collecting ground-truth data (11) for a machine-learning classifier,
- extracting from the collected ground-truth data (11) a list of features (12) which determines a current or past context of the user, and each feature having a feature's prediction strength calculated as fraction of classes misclassified when removing the feature;
- selecting the list of features (12) based on each feature's prediction strength;
- defining a plurality of reactiveness classes (101); both the extracted list of features (12) and the reactiveness classes (101) being input to the machine-learning classifier;
- classifying (102) the user according to the defined reactiveness classes (101);
- predicting the user's reactiveness for the given current or past context of the user by determining the most likely reactiveness class via the machine-learning classifier.

## Description

### Field of the invention

The present invention has its application within the telecommunication sector, especially, relates to messengers applications of user devices in wireless communication systems, such as WiMAX/WiFi networks and cellular networks.

### Background of the invention

Mobile Instant Messengers (MIM) are applications to exchange short messages on mobile phones, such as SMS (Short Messaging Service), WhatsApp, Google Hangout, etc. These are typically referred also to as messengers or messaging apps (applications). These applications, integrated in software for mobile phones, are distinguished from messaging software for desktop computers, to which most of the prior art applies. Besides, MIM is distinguished from IM (Instant Messengers) which refers to applications for exchanging messages between two or more users instantly; the instant delivery can result into near synchronous communication, where the partners have a discussion by exchanging a series of messages with little delay.

In the past few years, SMS flat rates and pervasive mobile Internet access, combined with Internet-based mobile messaging applications, such as WhatsApp, have reduced the cost of a message to zero. In consequence, these applications are used increasingly as mobile instant messengers (MIM) and users tend to expect responses to their messages within a few minutes, as disclosed in "What's up with whatsapp? Comparing mobile instant messaging behaviors with traditional SMS" by Church and de Oliveira,Mobile HCI 2013, Proceedings of the 15th international conference on Human-computer interaction with mobile devices and services, p.p. 352-361, 2013.

This expectation of immediacy in the communication is problematic for both the sender and the receiver of the message. For the sender, his/her messages are not always addressed within the expected time frame for a variety of reasons, including the lack of availability of the receiver. The receiver, on the other hand, increasingly feels the pressure of having to deal with tens of notifications per day and constantly checking for new messages to comply with this expectation.

One of today's main coping mechanisms in MIMs is based on sharing cues about the user's availability. Traditionally this status is set manually, however, users typically do not keep their status updated, as found in "Lilsys: Sensing Unavailability" by Begole et al., CSCW '04, Vol.6, p.p. 511-514, 2004. Hence, it becomes meaningless or sets the wrong expectations. To tackle this issue, WhatsApp introduced the use of "last-seen time", i.e. the time that the user had last opened the application, serving as an automatic approximation of availability. This approach has two drawbacks: First, knowing when a person is online has raised privacy concerns, as it creates strong expectations: "if you're online, it sort of means that it's in front of you and you are doing other stuff and you are ignoring me...". Second, neither a manual availability status nor sharing the last time a person accessed a messenger are good predictors of the receiver's reactiveness, i.e., whether the person will actually see a message soon or not. For example, the message recipient might have just read messages before engaging in a distracting task (e.g. driving, answering emails, etc.) or even be distracted while being online (e.g. being approached by another person).

Prior art has focused on predicting availability, i.e. whether a user will be available at this very moment for synchronous (e.g. phone calls) or near-synchronous (e.g. instant messaging) communication.

Many commercial instant messaging applications, such as ICQ, Skype, or Google Hangout allow to manually specifying one's availability. For example, a user can indicate to be 'busy' in order to communicate that others cannot expect immediate responses to their messages. The problem with manually updating availability is that people tend to forget to update always their status. Hence, availability statuses are not perfectly trustable.

Some applications, such as Skype, also automatically update availability on the basis of recent activities. For example, if the status is set to 'available', but the user has not interacted with mouse or keyboard for a while, the status is automatically changed to 'away'.

Prior art focuses on making the predicting as accurate as possible. However, this approach ignores the social aspects of predicting availability. By making predictions that are accurate to a minute, it causes social pressure to the message-receiving user.

In addition, the automatic alternative provided by some applications, e.g., WhatsApp, of sharing the users' online activity (last-seen time) puts pressure in answering. For example, if the automatic option of Sharing is being used, users are enabled to see in their displays when other users have last accessed the application. The idea is that this last-seen time allows the sender to make an estimate of how long it will take each of their contacts to read and respond to their message. If a receiver has been active in the last few minutes, it may be plausible that s/he is next to the phone and hence will notice an incoming message quickly. If the user has not used the application for hours, s/he might be away from the phone and therefore not read a message any time soon.

Another alternative -not necessarily privacy-preserving- approach is GlancePhone, proposed in "Glancephone: an exploration of human expression" by Harper et al., MobileHCl '09, Proceedings of the 11th International Conference on Human-Computer Interaction with Mobile Devices and Services, Article No. 24, 2009. This approach provides the sender of a message with a cue of the receiver's availability, for example, allowing callers to "glance" at the recipient through their mobile phone's camera before the call, in order to see whether the person is available.

These solutions that share simple indicators of availability, such as WhatsApp's "last seen" time or GlancePhone's ability to watch at others through the phone camera, turn out to raise important privacy concerns. For example, WhatsApp users report that "people read too much into when you're online and [...] why you didn't replay and they try to guess why, and sometimes this is annoying." "It seems like an invasion of privacy or something on the other person". Moreover, inferring availability from last-seen time may be flawed, as, for example, a user might just have checked messages before becoming unavailable, e.g., joining a meeting.

The research community has extensively studied predicting availability in the context of desktop environments by the means of machine-learning techniques. Previous work has investigated how to automatically infer availability through sensing, monitoring, and machine-learning techniques. An example is predicting interruptability of office workers: Fogarty et al. in "Predicting human interruptibility with sensors", ACM Transactions on Computer-Human Interaction. Vol 12, issue 1, p.p. 119-146, 2005, recorded data from four information workers to learn cues that would allow the prediction of when they could be interrupted in their offices. They conclude that a microphone, the time of the day, the usage of the phone, and activity information for mouse and keyboard can estimate an office worker's interruptability with an accuracy of 76.3%. On the basis of these findings, Begole et al. implemented a prototype called Lilsys, described in the aforementioned "Lilsys: Sensing Unavailability" , which senses sounds, motion, use of the phone, and use of the door to predict whether an office worker is possibly available to face-to-face interruptions. Lilsys was tested with 4 colleagues and was found to help better frame their interruption, i.e. instead of avoiding interruptions, co-workers would start a conversation with "I see that you are busy, but ..." Predicting interruptability of office workers focuses on workers with high workload and frequent visits by employees, such as managers.

Another approach is predicting subjective interruptability when working on computer, as described in "Busybody: creating and fielding personalized models of the cost of interruption" by Horvitz et al., CSCW '04, Proceedings of the 2004 ACM conference on Computer supported cooperative work, p.p. 507-510, 2004. BusyBody creates personalized models of interruptability for desktop computer users, by running in the background and constantly monitoring computer activity, meeting status, location, time of day, and whether a conversation is detected. Tested with 4 participants, it achieved accuracy between 70% and 87% with 470 to 2365 training cases. Rosenthal et al. describe another solution in "Using decision-theoretic experience sampling to build personalized mobile phone interruption models", Proceedings of International Conference on Pervasive Computing, 2011, focused on predicting when phone should be in silent mode. This is a personalized method to predict when a phone should be put to silent mode. They used experience sampling to learn user preferences for different situations. The considered features include time and location, reason for the notification, and details about the notification (e.g. whether the caller is listed in the user's favorites). After two weeks of learning, thirteen out of nineteen participants reported being satisfied with the accuracy of the automatic muting. Putting phone into silent mode is predicting situations when it is socially inappropriate to notify users audible. However, while this can serve as an indication for senders about when messages should not be sent, it does not give a prediction about the remaining time periods.

Avrahami et al. disclose a prediction of responsiveness in instant messaging for desktop computers, in "Responsiveness in instant messaging: predictive models supporting inter-personal communication", CHI '06, Proceedings of the SIGCHI conference on Human Factors in computing systems, p. 731-740, 2006. In a study with 16 participants, Avrahami et al. studied the feasibility of predicting how fast a user will respond to an instant message in a desktop computer environment. They collected over 90,000 messages. From this data, they built models that were able to predict with an accuracy of 90.1 %, whether a message sent to initiate a new session would get a response within 30 seconds, 1, 2, 5, and 10 minutes. The features included in their model were events from the instant messaging client, such as whether the message was sent or received, and events from the desktop environment, such as keyboard/mouse activities or window events. Features that were strong predictors of availability included the amount of user interaction with the system, the time since the last outgoing message, and the duration of the current online-status. Nonetheless, this method of prediction can only be applied to instant messages (IM) on desktop computers. Desktop IM has a main difference with respect to MIM: Desktop IMs allow to opt-out much easier, i.e., in order to be available, users have to sit in front of the computer, and they have to start the instant messaging application but by simply not starting the application or walking away from the computer, they become unavailable. Mobile phones, in contrast, accompany us throughout the day, and messages therefore reach us at all times, in all places, and all situations.

Only recently, by introducing a 'Do Not Disturb' Mode in mobile (i-)phones, in which notifications are not automatically delivered, Apple enabled users to 'opt-out' of receiving instant messages to their phones. Hence, the sheer fact of running a desktop instant messenger itself is already a strong indicator for reactiveness, which is not present for phones.

An example of predicting when IM user becomes available id described in US2008/0162632, where the probability that IM contact user becomes available by a specified time is computed by collecting statistics for when contact user become available and unavailable. The probabilistic information can relate to the likelihood that the selected one of the buddies will change instant messaging state at a specified time.

WO2013106995 discloses a method and apparatus for determining a predicted duration of a context. Merely predicting the future contexts, alone, amounts to nothing more than predicting the current context based on past context information. In other words, predicting the future context still requires the continuous collection of context information to continuously determine the future context.

EP2547068 describes a method of determining availability from context and responses to communication requests by computing user availability when a person requests conducting a communication session via different communication channels. Examples given are instant messengers and phone calls. The computation is based on, for example, user responses (e.g., answered, ignored, response time, etc.) to a specific communication request (e.g., source of request, time of request, type of request (e.g., voice call, video call, message, and the like)) under different user contexts (e.g., derived from one or more sources including, but not limited to, presence, location, calendar, media being consumed by the user, used defined, and the like).

Therefore, there is a need in the state of the art for a method to provide information related to a prediction of MIM users' activity for asynchronous communications between user devices of mobile networks.

### Summary of the invention

The present invention solves the aforementioned problems and overcomes previously explained state-of-art work limitations by disclosing a method which enables communication partners of a mobile network (using GSM phones or 3G/4G smartphones, tablets, etc.) to manage expectations. Instead of predicting availability of a user at this very moment for synchronous (e.g. phone calls) or near-synchronous (e.g. instant messaging) communication, the present invention deals with increasingly dominant asynchronous communication applications on phones, such as SMS or over-the-top messengers and provides a prediction of reactiveness. In the context of this invention, reactiveness is defined as noticing a message notification in a given time interval. For example, an implementation can provide a user and indication, whether a message (e.g. SMS) is likely to be read within the next 5 minutes by the receiver. A main advantage of reactiveness prediction over availability prediction in asynchronous communication is that even if the receiver is considered not available, s/he might become available any second. In the present invention, senders do not receive fast responses if the system does not predict high reactiveness and receivers can feel less social pressure to frequently check their phone for missed messages while they are available with other activities.

The present invention relies on the use of features, which are defined, in the context of this invention, as variables that reflect the usage context or past usage, being strong predictors for the desired classes of reactiveness.

In order to predict the reactiveness of a MIM user, according to an embodiment of the invention, the mobile user device (e.g., phone) uses data gathered from internal sources and sensors, such as user activity, the context of use, or habits. In a preferred embodiment, the most relevant user activity is approximated by the following data:
1) the time when the screen was last turned on,
2) the time since the user last viewed a notification,
3) the hour of the day,
4) the time since the proximity sensor last reported that the screen of the mobile device was covered,
5) the ringer mode,
6) the time since the screen was last turned off (and/or a Boolean value indicating whether the screen is on or off).

In a preferred embodiment, the present invention can be implemented by running a local background service in the user's phone, which monitors the above-mentioned (as exemplary illustration) features and updates the prediction accordingly. This service can be implemented based on a machine-learning classifier. According to an implementation option of the classifier, If the prediction changes, the proposed method can optionally push to a server a binary value as an indication of the changes (e.g., indicating fast/slow reactiveness), which then can be accessed by potential senders.

A first aspect of the present invention refers to a method for predicting reactiveness of MIM users (i.e., users enabled to use messaging in mobile user devices and to react with their mobile user devices when a message is received) which comprises the following steps:
- collecting ground-truth data for a machine-learning classifier,
- extracting a list of features from the collected ground-truth data, the list of features determining a current or past context of the user, and each feature having a feature's prediction strength calculated as a fraction of classes misclassified by the machine-learning classifier when removing the feature;
- selecting the list of features based on each feature's prediction strength;
- defining a plurality of reactiveness classes; both the extracted list of features and the reactiveness classes being input to the machine-learning classifier;
- classifying the user by the machine-learning classifier in accordance with the defined reactiveness classes;
- predicting the user's reactiveness for the given current or past context of the user by determining the most likely reactiveness class via the machine-learning classifier.

In the context of the invention, Prediction Strength indicates to what extend each feature contributes to correctly classifying reactiveness. Prediction strengths are quantified by the number of additional misclassification that occur when removing one of the features from the selected list of features.

The method proposed to predict user reactiveness to a message received at a mobile device/terminal uses the machine-learning classifier for:
- obtaining a set of parameters (features) based on the user's activity of said mobile device, Recent notification activity in said terminal, the state of said user's terminal, and contextual information;
- applying a classifier selection to said set of parameters based on prediction strength computation function which is used for ranking said set of parameters into subsets,
- providing a prediction of user reactiveness to the received message by using a final selected subset of parameters, this selection of parameters can be optimized/updated according to accuracy of prediction and precision of reactiveness classes computation.

In a second aspect of the present invention, a computer program is disclosed, comprising computer program code means adapted to perform the steps of the described method, when said program is run on a computer, a digital signal processor, a field-programmable gate array, an application-specific integrated circuit, a micro-processor, a micro-controller, or any other form of programmable hardware.

The method in accordance with the above described aspects of the invention has a number of advantages with respect to prior art, which can be summarized as follows:
- Much of the previous work, including the closest prior art, try to predict availability for synchronous or near-synchronous communication. On the contrary, the present invention focuses on asynchronous communication by predicting reactiveness, i.e. the time that will pass until a message is being read.
- Prior art looks for the most accurate prediction as possible, which creates additional expectations and social pressure. The present invention stresses the need to achieve a balance in the prediction accuracy in order to avoid social pressure and stress on the user. Phone users are concerned about the "last-seen time" model, e.g., of Whatsapp, since it easily creates social pressure. For example, people cannot postpone answers in a polite manner: "I might not always want to answer immediately to all messages. Sharing last-seen time puts pressure in answering or has the risk that other people can think that the user is ignoring their messages." Therefore, it is not only positive, but crucial that the proposed model is not perfect, because it allows for plausible deniability and Butler Lies (a term coined by researchers in Cornell University's Social Media Lab that describes small/innate lies which are usually sent electronically, and are used to terminate conversations or to save face.), such as "Sorry! I just saw your message". Since the present invention indicates that the prediction may be wrong, receivers can always blame it to an estimation error if they do not want to react in the way that is predicted. At the same time, knowing that expected reactiveness is being shared with the sender may alleviate some of the pressure on the receiver, since the receiver do not have to explicitly explain that s/he is busy. Reactiveness prediction is right the majority of (but not all) the times, so that potential senders can perceive it as a trustable source of information, while also receivers are allowed to ignore received messages and blame it to a mistake in the prediction (plausible deniability).
- Researches have argued that conveying the last-seen time, i.e., the time a messaging application had last been opened, has severe disadvantages (refer to prior art above described: "What's up with whatsapp? Comparing mobile instant messaging behaviors with traditional SMS" by Church and de Oliveira, 2013). Predicting whether a message notification is likely to be viewed within the next few minutes on the basis the when the user was last-seen using the application has an accuracy of only 56.2%, which indicates that expectations will be frequently violated. Conversely, the accuracy of the proposed reacttiveness prediction by the present invention represents a step forward in designing tools that help MIM users manage expectations. Unlike manual status updates, which are often forgotten to update ("Lilsys: Sensing Unavailability" by Begole et al., 2004), or sharing the last-seen time, which is a less accurate predictor, the level of accuracy that the present invention achieves might be sufficient to make senders trust it.
- 'Last-seen' time-based approach has raised important privacy concerns, underlined by the fact that popular mobile applications have been designed to hide this last-seen status. In contrast, the features required for the computation of the proposed reactiveness predictor do not require accessing personal information, and do not have to be shared with a third-party. Furthermore, there is a certain level of desirability in users for novel solutions that help them make their receptiveness visible to others.
- Existing solutions such as BusyBody, US2008/0162632 or the approach described by Avrahami et al., focus only on the desktop computer, not on mobile phones. Desktop instant messengers are distinctively different usage patterns than mobile instant messengers: to receive messages via desktop instant messengers, the user has to have the messenger started, which is not always the case by default, and the user has to be near the computer. Messengers on mobile phones, in contrast, are usually activated by default, and the mobile phone is oftentimes near the user throughout the day. BusyBody predicts the cost of interruptability instead of reactiveness. The cost of an interruption might be low, but the user might still be unlikely to pick up the phone soon.
- Unlike EP2547068A1, the present invention does not care if receiver can be interrupted - and ongoing tasks can be possibly interrupted- when receiving a message. The context of the invention disclosed in EP2547068A1 is also instant messaging (IM), not MIM (which are not necessarily instant, i.e., sender may be fine with receiving a response after long time).

These and other advantages will be apparent in the light of the detailed description of the invention.

### Description of the drawings

For the purpose of aiding the understanding of the characteristics of the invention, according to a preferred practical embodiment thereof and in order to complement this description, the following figures are attached as an integral part thereof, having an illustrative and non-limiting character:
Figure 1 shows flow chart of a method for obtaining and selecting features used in the predicting reactiveness of messaging users in mobile communications, according to a preferred embodiment of the invention.
Figure 2 shows a block diagram of a possible implementation of the method for predicting reactiveness of messaging users with mobile user devices as a service in a mobile network, according to a preferred embodiment of the invention.
Figure 3 shows a graphical user interface of a possible implementation of the method in the mobile user devices, according to a preferred embodiment of the invention.

### Preferred embodiment of the invention

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

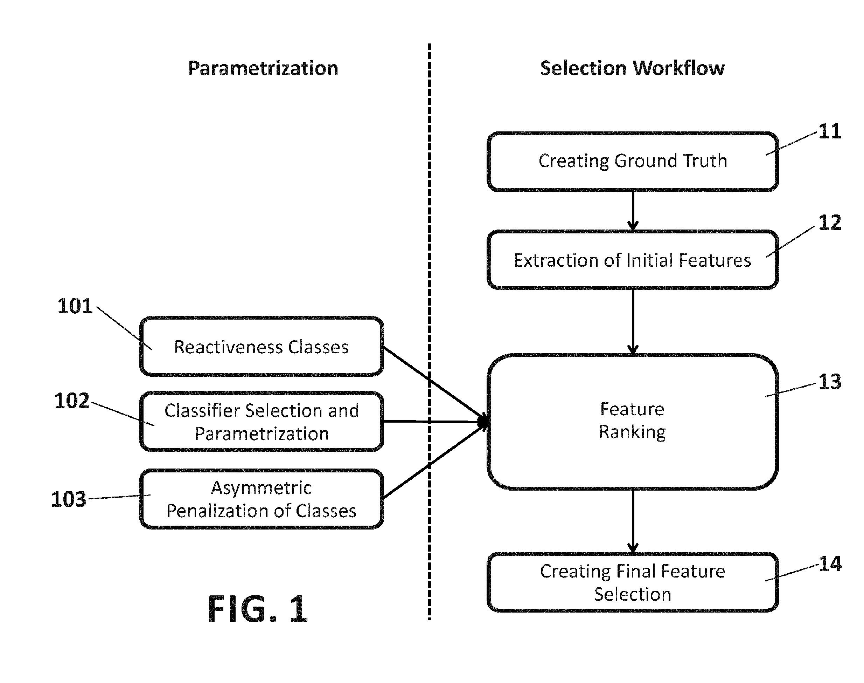

It is within this context, that various embodiments of the invention are now presented with reference to the FIGs. 1-3.

Figure 1 presents a workflow of the main steps for collecting and extracting the features to be used for predicting reactiveness, which are classified according to desired reactiveness classes, and selecting the final features according to a defined parameterization and an error penalization which gives a feature ranking as described below.

The method for predicting reactiveness uses a machine-learning classifier to determine the different reactiveness classes previously defined.

In order to machine-learn how to predict reactiveness, it first is necessary to collect ground-truth data (11). Therefore, first of all, the ground truth for the machine-learning classifier is gathered. Ground truth refers to a data set, where all potential features are recorded, alongside the actual reactiveness, i.e. the time when the user viewed the message.

For the preferred embodiment, it is sufficient to record:
i) application and time of arrival for each message,
ii) elapsed time between the time of arrival and the time of reading the message,
iii) opening and closing times of applications,
iv) time when the phone's screen was turned on or off,
v) time when the phone's screen was (un)covered,
vi) and the status of the phone's ringer (silent, vibration, sound).

These six features fed into a Random Forest machine-learning classifier can predict reactiveness with 70.6% global accuracy and 81.2% precision in predicting high reactiveness.

According to the definition of reactiveness, in the context of the invention, reacting to a message by a user can be performed in three possible ways:
a) The user visits a notification center, where modern phone operating systems provide a comprehensive list of all unattended notifications in general and all unread messages specifically. Since the notifications often contain previous messages, the user is able to read parts - or in case of a short message, even the whole - body of the message. When visiting the notification center, all unread messages are considered/labelled as "reacted to" by the participant ser.
b) The user can react to a message by directly opening a message reader application in his/her mobile device, the application having received an unread message. When the user opens the application which has unread messages, these messages are considered/tagged as "shown" by the user.
c) If the messaging application is available on other platforms, the user can view the message on those. State-of-the-art mobile phone operating systems, such as iOS or Android, will in this case inform the local application that the message has been read elsewhere.

From the ground-truth data (11), a list of features is extracted (12). In accordance with a preferred embodiment, the list includes features regarding:
- The user's activity, such as interaction with the screen of the mobile device or with the device itself.
- Recent notification activity, such as the number of pending notifications.
- The state of the mobile device, e.g., phone, such as the ringer mode or whether the phone is in the pocket.
- The context of the user, such as the hour of the day or the day of the week.

For example, Table 1 shows a list of 17 potential features for the prediction of the user's reactiveness.

**Table 1**

| **Feature** | **Type** | **Description** |
|---|---|---|
| TimeSinceLastNotSec | Time (s) | Time since the last |
| | | notification was received |
| LastNotifViewed | Boolean | Flag whether last notification has already been viewed |
| PendingNotCount | # | Number of unveiled notifications |
| TimeSinceLastViewed | Time (s) | Time since the user last viewed any notification |
| IsScreenOn | Boolean | Flag whether screen is on or off |
| TimeSinceLastScreenOnOff | Time (s) | Time since the screen was last turned on OR off |
| TimeSinceLastScreenOn | Time (s) | Time since the screen was last turned on |
| TimeSinceLastScreenOff | Time (s) | Time since the screen was last turned off |
| IsScreenCovered | Boolean | Flag whether screen is covered (using proximity sensor) |
| TimeSinceCoverChangedEvent | Time (s) | Time since the status of the proximity sensor last changed |
| TimeSinceLastScreenCovered | Time (s) | Time since the screen was last covered |
| TimeSinceLastScreenUnCovered | Time (s) | Time since the screen was last uncovered |
| IsInPocket | Boolean | Flag whether device is in pocket |
| RingerMode | Status | Ringer mode: unknown, silent, vibration, or sound |
| HourOfTheDay | Number | Hour of the day, e.g. '16' for 16:32 |
| DayOfTheWeek | Number | Day of the week, e.g. '1' for Monday |
| IsWeekend | Boolean | Flag whether it is Saturday or Sunday |

For alternative embodiments of the invention, it might be necessary to create additional features, such as user location, phone activity, proximity to other objects and people, calendar events, events of interaction with the touch screen and hardware controls etc., and therefore collect new ground-truth data

According to a preferred embodiment of the invention, the proposed method is applied to predict reactiveness for messengers, which includes applications like SMS, WhatsApp, or Google Hangout. Nevertheless, SMS and WhatsApp messages can only be read on a mobile phone, while Google Hangout can also be read and answered on the desktop computer, which results into different response patterns. If increased accuracy is required, the method can consider the application type as a feature to be used in the prediction and reactiveness can be computed specifically for individual different applications. Potential features include: for which application the last notification is received, if the application is the same as the one that the sender considers to use, etc. One drawback of this approach is that for each application a model has to be computed and reactiveness as to be estimated and shared with the sender. From a user perspective, the sender then has to check multiple values for a potential receiver, instead of a single prediction only. According to a preferred embodiment, the method is focused on messengers, since these applications come along with the highest expectations towards reactiveness. However, the collection of ground truth data can also capture other types of applications, e.g., applications that generate email and social network updates. Therefore, alternative embodiments can include those types of applications as well. This may be done inclusive, i.e. by treating all applications types equally and compute one overarching prediction for reactiveness. Preferably, however, other types of applications are treated individually, and individual predictions are computed for the different applications types. The rationale is that expectations and usage patterns of those applications differ significantly and may strongly degrade the predication accuracy if not treated individually.

After having the features extracted (12), the next step is to determine a feature ranking (13) in order to obtain a final selection of features (14).

Please, note that, -final- feature selection (known in prior art also as variable selection, attribute selection or variable subset selection), in machine learning, is the process of selecting a subset of relevant features for use in model construction. The central assumption when using a feature selection technique is that the initial data contains many redundant or irrelevant features. Redundant features are those which provide no more information than the currently selected features, and irrelevant features provide no useful information in any context. Therefore, the final selection of features (14) gives a subset of the initial list of extracted features (12).

For feature ranking (13), three inputs are used: reactiveness classes (101), parameterization and selection of the machine-learning classifier for classifying (102) users in accordance with the reactiveness classes (101), and an asymmetric error penalization of this classification by assigning a penalty cost (103) to meet a trade-off between the accuracy of the classifier selection and the accuracy of the determined reactiveness classes.

In a preferred embodiment, reactiveness classes are just two: slow and fast. Alternative embodiments can extend this space of classes. For example, if in a possible scenario of application of the invention, from the collected ground-truth data it is extrated that a significant portion of messages has been viewed within the first minute, a logic extension of the reactiveness classes is to include a rapid class in case that the features predict that the user will view the message almost instantly. Thus, in accordance with a preferred embodiment, the proposed method divides reactiveness into two classes: fast and slow, with the median time as pivot threshold. This turns the problem of modeling the user's reactiveness to messages into a class-prediction problem.

For example, in a real use case scenario, having collected a total of 6,423 message notifications from 24 phone users, the median delay between receiving and reacting to a message is 6.15 minutes. Hence, messages that were viewed within 6.15 minutes are labeled fast, those where the users took longer are labeled slow.

In order to solve the classification task, a wide range of well-known machine classifiers have been tested and empirically compared in terms of performance, including naive Bayes, logistic regression, support vector machines (SVM), random decision trees, and random forests. The best performance has been obtained with random forests, and thus used them as classifiers throughout the following analysis, having built random forests by using 10 decision trees. Random forests train an ensemble of random decision trees and return the class that is the mode of the classes from the individual trees. For all tests, the data were split into data for training and test data, e.g, 80% of the data used as training data and 20% as test data. Training the Random Forest with those 80% of the data and testing this partition with the remaining 20% part achieved an accuracy of 68.71%, when using the full list of 17 features.

Given that the classifier is meant to be part of a mobile intelligent user interface, it is critical to incorporate human-centric considerations when building the classifier. In the particular case of the random forests classifier, it was observed that not all misclassifications are equally bad from the user's perspective. In fact, high expectations in terms of quick reaction times generate stress in the users of Mobile Instant Messengers (MIMs). Hence, from the perspective of reducing expectations and stress, it would be better to falsely predict a slow reaction and surprise the sender with a fast response, than falsely predicting a fast reaction and keep the sender waiting, possibly leading to disappointment.

In the model used in the example case above, the precision for predicting fast reactiveness, i.e., correctly recognising that the receiver is going to respond within a few minutes, was 74.5%. To investigate whether this value can be improved, configurations where misclassifications are not treated equally were explored. For example, both for training and testing the classifier, a penalty cost is assigned when the slow class is misclassified as fast which is higher than the assigned cost when the fast class is misclassified as slow. Such a different misclassification cost implies a trade-off between the overall classification accuracy and the accuracy for the fast class. The higher the difference in cost between the two classes (fast and slow), the higher the accuracy for the fast class prediction and the lower overall accuracy. The classifier was tested by changing the relative cost of the misclassification of fast from 1.0 (i.e. the same as that of slow) to 2.0 (i.e. two times larger than that of slow) with a regular interval of 0.1 increments. A significant change was found when the relative cost reached 1.5. Accuracy dropped from 68.66% to 65.08%, while precision for fast reactiveness increased from 74.6% to 79.0%. Hence, the preferred misclassification penalty factor for the fast class is 1.5.

Thus, the preferred model penalizes the prediction of slow with a factor 1.5, but this factor can be subjected to alteration to bias the model towards different directions. For example, in order to maximize global accuracy, the models may be trained with neutral bias (1.0). In case more classes are added, the class penalties have to carefully be revisited and renegotiated.

In order to make the algorithm resource-efficient for usage on mobile phones, the feature ranking (13) is performed to determine which features are the strongest predictors and to filter out redundant or irrelevant features. Using a stepwise feature-selection process, the 17 features previously described in Table 1 were ranked by the feature's prediction strength. In this case, prediction strength is measured by what addition fraction of classes will be misclassified when removing this feature. For example, in the case of TimeSinceLastScreenOn, removing this feature will result into 0.088 = 8.8% fewer correctly classified instance. Table 2 shows an example of the 17 features ranked by their prediction strength.

**Table 2**

| **1.1.1.1.1.1.1 trength** | **Name** | **Accuracy** | **Fast Precision** |
|---|---|---|---|
| -0.088 | TimeSinceLastScreenOn | 0.524 | 0.529 |
| -0.053 | TimeSinceLastViewed | 0.603 | 0.649 |
| -0.042 | HourOfTheDay | 0.635 | 0.718 |
| -0.038 | TimeSinceLastNotifSec | 0.622 | 0.701 |
| -0.038 | TimeSinceLastScreenCovered | 0.672 | 0.75 |
| -0.037 | LastNotifViewed | 0.628 | 0.694 |
| -0.037 | TimeSinceLastScreenOnOff | 0.672 | 0.757 |
| -0.036 | InPocket | 0.672 | 0.748 |
| -0.036 | RingerMode | 0.689 | 0.763 |
| -0.036 | PendingNotifCount | 0.65 | 0.724 |
| -0.035 | TimeSinceCoverChangedEvent | 0.656 | 0.73 |
| -0.034 | TimeSinceLastScreenOff | 0.693 | 0.788 |
| -0.034 | DayOfTheWeek | 0.696 | 0.783 |
| -0.034 | ScreenOn | 0.706 | 0.812 |
| -0.034 | Weekend | 0.695 | 0.792 |
| -0.033 | ScreenCovered | 0.684 | 0.759 |
| -0.032 | TimeSinceLastScreenUnCovered | 0.663 | 0.741 |

The example of Table 2 shows that the strongest feature is the first in the ranking: TimeSinceLastScreenOn.

From the strongest feature of the ranking, a model is created to compute accuracy and precision in determining fast classes by the classifier. Step by step, features from the ranking list are added to the model, from the strongest feature to the one ranked as weakest, and accuracy and fast precision are recomputed. If by adding a specific feature accuracy and fast precision are improved, the feature is kept for the final selection; otherwise, the feature is discarded. For example, selected features can be: (1) the time when the screen was last turned on, (2) the time since the user last viewed a notification, (3) the hour of the day, (4) the time since the proximity sensor last reported that the screen was covered, (5) the ringer mode, (6) the time since the screen was last turned off, and (7) a Boolean value indicating whether the screen is on or off.

Using these seven features, a preferred embodiment of the model achieves 70.60% accuracy and 81.20% precision for the classification of the fast class with the test data set.

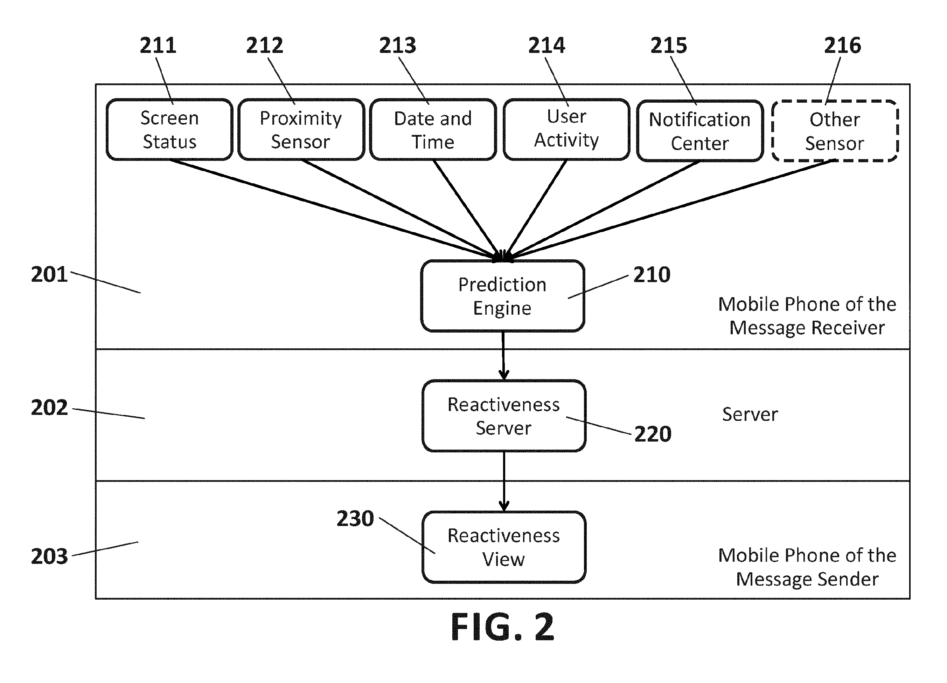

According to a possible embodiment of the invention, Figure 2 shows the components involved in the implementation of the above described method as a Service In order to deliver a reactiveness prediction value to an end user. On the mobile device of the message receiver (201), the features are constantly updated from screen status (211), proximity sensors (212), date and time (213), user's activity (214), callbacks from the notification center (215) and other sensing sources (216). If any of these features change, the prediction engine (210) running in the mobile device of the message receiver (201) reruns the above described prediction algorithm. In case that the reactiveness prediction has changed, the prediction engine (210) pushes the currently predicted reactiveness value to a server (220) running in a server node (202) of the network, communicated with messaging users. The updated reactiveness value ca, e.g., on request, be forwarded to the mobile device of the message senders (203), which runs a graphical user interface (230) to display the reactiveness values of the potential message receivers. The graphical user interface (230) can be integrated in a messenger application running in mobile device of the message sender (203) and allows to browse through the predicted reactiveness values for each contact user of the sender. On the basis of the prediction, the sender can get an impression about what level of reactiveness to expect when sending a message at this point in time. This helps to manage expectations on the sender side and alleviate social pressure on the receiver side.

Alternative embodiments of the invention cannot only predict reactiveness, but also record actual reactiveness. These recordings can then be used to create personalized prediction models for individual users. There are several ways of implementing a personalized prediction:
- The recorded events are added to the initial model and slowly personalize it to the user. The advantage is that this model already has sufficient data from the beginning on. The disadvantage is that it takes a while until the personalization becomes effective.
- The recorded events are used to create a new model from scratch and thus slowly create a very personal model. The advantage is that this model is highly specific. The disadvantage is that initially the model lacks data and be over fitting to recent usage patterns.

A personalized model and the generic model may provide two predictions, from which a decision algorithm, which uses the model size and the computed likelihood of the predictions, picks the one that appears to be more likely to be true.

Alternatively, the actual reactiveness recordings can be anonymized and uploaded to the reactiveness server (220) to create an increasingly better global model of reactiveness.

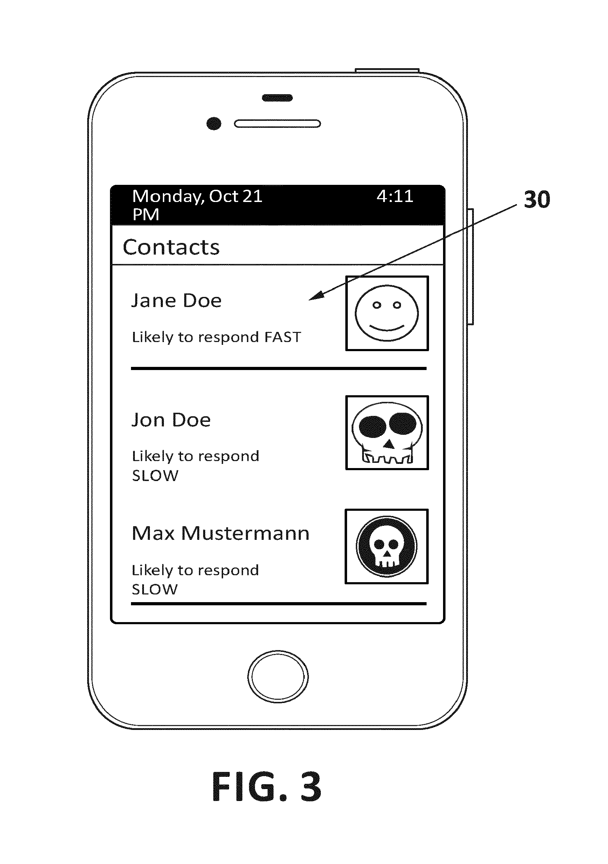

The implemented service can be offered by an application running in the mobile user device and providing the end user with a GUI (30), as shown in Figure 3, which allows the user to browse through the estimated reactiveness of each user's contact. On the basis of this prediction, the sender user gets an impression about what level of reactiveness to expect when sending a message at this point in time to any of his/her contacts. Thus, the service is a helpfully tool to manage expectations on the sender side and alleviate social pressure on the receiver side.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for predicting reactiveness of users of mobile devices for messaging, the method comprising:
- reacting to a message by a user with a mobile user device which is a receiver of the message,
and being **characterized by** further comprising:
- collecting ground-truth data (11) for a machine-learning classifier,
- extracting a list of features (12) from the collected ground-truth data (11), the list of features (12) determining a current or past context of the user, and each feature having a feature's prediction strength calculated as a fraction of classes misclassified by the machine-learning classifier when removing the feature from the list of features (12);
- selecting the list of features (12) based on each feature's prediction strength;
- defining a plurality of reactiveness classes (101); both the extracted list of features (12) and the reactiveness classes (101) being input to the machine-learning classifier;
- classifying (102) the user by the machine-learning classifier in accordance with the defined reactiveness classes (101);
- predicting the user's reactiveness for the given current or past context of the user by determining the most likely reactiveness class via the machine-learning classifier.

2. The method according to claim 1, further comprising:
- ranking (13) features by their prediction strength to obtain a final selection of features (14),
- classifying (102) the user by the machine-learning classifier in accordance with the defined reactiveness classes (101) and using the final selection of features (14).

3. The method according to claim 2, further comprising:
- creating a model to compute accuracy and precision in classifying the user in accordance with a specific class of the defined reactiveness classes (101),
- updating the final selection of features (14) by adding a selected feature from the ranking (13) to the final selection of features (14) only if the accuracy and precision computed by the model using the selected feature are higher than the accuracy and precision computed using the final selection of features (14) before adding the selected feature.

4. The method according to any of claims 1-2, further comprising:
- assigning a penalty cost (103) to penalize the classifying (102) of the user in accordance with a specific class of the defined reactiveness classes (101).

5. The method according to any preceding claim, further comprising providing a sender user which is a sender of the message from a mobile device with the classifying (102) of the user reacting to the message.

6. The method according to any claim 5, wherein the machine-learning classifier is integrated in a user interface (230) of the sender user's mobile device.

7. The method according to claim 5, wherein the machine-learning classifier is in a server (220) communicated with the sender user's mobile device.

8. The method according to any preceding claim, wherein the machine-learning classifier is integrated in a prediction engine (210) of the mobile user device.

9. The method according to any preceding claim, wherein the machine-learning classifier is Random Forest.

10. The method according to any preceding claim, wherein the extracted initial list of features (12) comprises:
- type of messaging application in the mobile user device
- opening and closing times of the application,
- arrival time of the message,
- elapsed time between the arrival time and the time of reading the message,
- time at which the screen of the mobile user device is turned on or turned off,
- time when the screen of the mobile user device is covered or uncovered,
- ringing status of the mobile user device.

11. The method according to any preceding claim, wherein reacting to a message by the user comprises requesting from a notification center (215) a list of unread messages by the user.

12. The method according to any preceding claim, wherein reacting to a message by the user comprises opening a message reader application in the mobile user device.

13. The method according to any preceding claim, wherein the ground truth data comprises a type of messaging application selected from SMS, WhatsApp, Google Hangout, and messaging applications generating email and social network updates.

14. A computer program product comprising program code means which, when loaded into processing means of a computer, a digital signal processor, a field-programmable gate array, an application-specific integrated circuit, a micro-processor, a micro-controller, or any other form of programmable hardware, make said program code means execute the method according to any of claims 1-13.
